# EUROPEAN PATENT SPECIFICATION

(11) **EP 0 428 257 B1**
(45) Date of publication and mention of the grant of the patent: **29.05.1996**
(21) Application number: 90310514.6
(22) Date of filing: 26.09.1990
(51) Int. Cl.: D21F 1/70, D21B 1/32

(54) **Flotation machine for de-inking**
Flotations-Deinking-Vorrichtung
Machine à flottation pour éliminer les encres

(30) Priority: 16.10.1989 JP 266210/89
(43) Date of publication of application: 22.05.1991
(60) Divisional application: 95102747.3
(73) Proprietor: ISHIKAWAJIMA-HARIMA JUKOGYO KABUSHIKI KAISHA, Chiyoda-ku Tokyo-to (JP); ISHIKAWAJIMA SANGYO KIKAI KABUSHIKI KAISHA, Chuo.ku, Tokyo-to (JP)
(72) Inventor: Iwashige, Naoyuki, Nishikoigakubo Kokubunji-shi, Tokyo-to (JP); Eguchi, Masakazu, Sumida-ku, Tokyo-to (JP)
(74) Representative: Jennings, Nigel Robin

(56) References cited:
- EP-A- 0 096 952
- DE-A- 1 027 186
- DE-A- 3 635 642
- DE-C- 742 856
- FR-A- 2 580 683
- US-A- 1 608 896

## Description

The present invention relates to a flotation machine for de-inking waste paper stock for use in a waste paper recovery installation for defiberising and cleaning waste paper and reconverting it into paper making material. In such a machine, bubbles are produced in the stock liquid in a flotation cell and ink and other particles, such as oil and pitch, which were attached to the paper are adsorbed by the bubbles and carried to the liquid surface by buoyancy in the form of froth which is then removed.

Methods of de-inking waste paper are in general divided into three types, namely the flotation method, the washing method and a combination thereof.

In the flotation method, air is admixed to waste paper stock liquid, which has been obtained by defiberising waste paper and adding chemical agents, and the free ink particles are adsorbed by the air bubbles which are generated. The air bubbles with the ink particles entrained therein float up to the surface of the liquid and the ink particles are separated and removed. In the washing method, a large quantity of water is used to remove the free ink particles.

In order to obtain satisfactory results with the washing method and to minimise any reduction in the yield and any increase in the load on the effluent water system, a combination of the flotation and washing method is generally used. If the efficiency of the flotation method is increased, the contribution by the washing method may be minimised or largely eliminated.

In the flotation method, the smaller the diameters of the bubbles, the more readily the fine ink particles are adsorbed by them. It is therefore important for efficient operation of the flotation method that the total surface area of the bubbles is large, that the bubbles are uniformly distributed in the waste paper stock liquid and that the residence time of the bubbles in the stock liquid is long. For the same quantity of air which is added to the stock liquid, the finer the bubbles, the larger is the total surface of the bubbles and thus the slower is the flotation speed of the bubbles. The efficiency of the flotation method is therefore principally determined by the uniform admixing of a larger quantity of fine air bubbles to the stock liquid and by the effectiveness of their removal as froth from the liquid.

Formerly, printing ink adhered relatively weakly to paper fibres and was relatively readily separable. The quality requirements for de-inked pulp were also not particularly high. As a result, known flotation machines could attain satisfactory results with a relatively small quantity of air and the resultant relatively short residence time of the bubbles.

Recently, problems have arisen which can not be solved by the known de-inking technique using the flotation method. Firstly, the adhesion strength of printing ink to paper has increased as printing techniques have been developed or refined, such as the use of the offset process for printing newspapers, so that mechanical force is required to separate the ink resulting in the separated ink particles being of smaller diameters than previously. Secondly, the utilisation of waste paper has greatly increased as a result of the awareness that natural resources are decreasing globally. Thirdly, the quality demanded for paper used in printing has increased because of an increased demand for visual appeal and coloration of printed paper. Fourthly, strict regulations are increasingly applied to effluent water discharged from paper-making processes.

If the operation of the washing method is intensified, the effluent water cannot satisfy the strict regulations. There is therefore a general acceptance among experts that use of an effective flotation method is the best approach for overcoming these problems. Thus, various enhanced flotation machines have recently been devised.

A recent trend in flotation machines is to increase the volume of the flotation cell and the bubble residence time to increase the opportunity of contact of the bubbles with ink particles. The air bubbles are made finer and are admixed in a large quantity to the waste paper stock liquid to produce a large quantity of froth. This trend is influenced not only by mechanical improvements but also by improvements in de-inking agents (surfactants).

Table 1 below sets forth a comparison in mechanical performances between a conventional flotation machine and a recent flotation machine.

**TABLE 1**

| | Conventional machine | Recent machine |
|---|---|---|
| Air volume (G/L)* | 1-3 | 4-8 |
| Cell number per 100 pulp tonnes per day | 6-20 | 3-6 |
| Cell capacity (m³) per 100 pulp tonnes per day | 70-120 | 150-200 |
| Cell capacity (m³) | 5-20 | 20-50 |
| Primary residence time** (min) | 10-15 | 20-30 |
| Power source unit (kWH per pulp tonne) | 20-40 | 40-60 |
| Increment in brightness (Hunter) | 3-4 | 6-10 |
| Remarks: | | |

| | | |
|---|---|---|
| *G/L: air volume (Gm³/min) per unit processing liquid (Lm³/min) | | |
| ** residence time in primary flotation machine. Primary reject is secondarily processed and secondary accept is returned to primary inlet. | | |

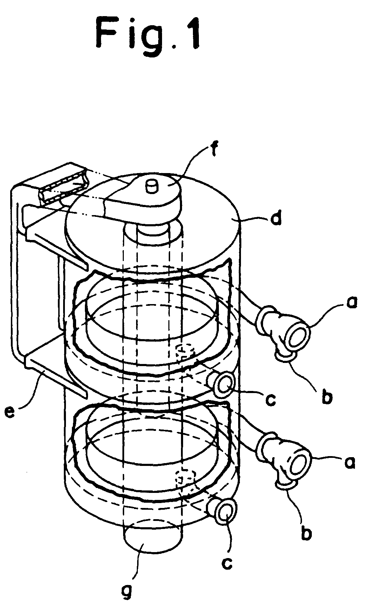

Figure 1 is a partly cut-away diagrammatic perspective view of a known type of vertical cylindrical cell flotation machine in which reference character a denotes an air inlet; b, a stock liquid inlet; c, a stock liquid outlet; d, a cell; e, an air port for expelling froth; f, a froth fan; and g, a froth outlet. As shown, the machine comprises two substantially identical cells stacked on one another. Air is admixed to the stock liquid by means of the ejector effect at each stock liquid inlet. The liquid is made to flow tangentially into each cell and swirls around the axis of the cell with the air mixed into the liquid. In the cell, the air floats up as bubbles to form froth. The stock liquid is discharged from the vicinity of the axis to the cell via the outlets c. Froth is forced to flow into an opening (not shown) at the froth outlet g by the air blown from the port e on the side wall of the cell near the liquid level and then is discharged through the outlet g to the exterior. The froth pushing air is cycled by the froth fan f.

In a flotation machine of this type, the quantity of air mixed into the liquid cannot be increased since the ait is injected by means of the ejector effect. Even if the air is injected under compression, the result is merely that the number of larger-diameter and thus ineffective bubbles is increased. In addition, it is difficult optimally to control the velocity of the swirling liquid; if the velocity of the liquid is too low, stock rejects are increased; if the swirling velocity is excessive, the fine air bubbles, which are subject to a lower buoyancy force, may fail to cross the swirling flow to float up, resulting in unsatisfactory separation of the froth from the stock flow.

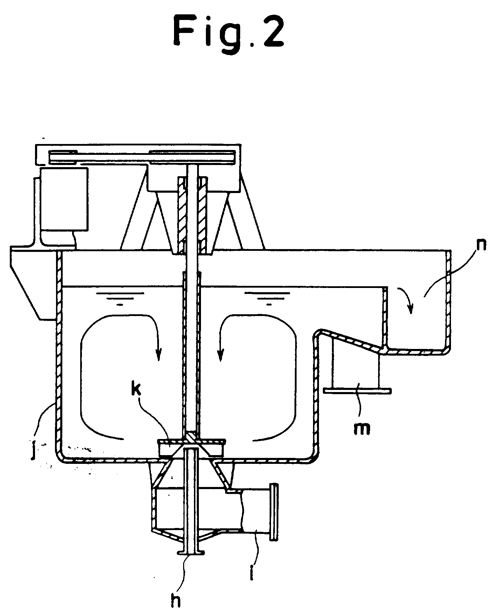

Figure 2 is a diagrammatic side sectional elevation of another example of a known type of flotation machine, namely a box cell flotation machine in which reference numeral h denotes an air inlet; i, a stock liquid inlet; j, a box type cell; k, a disc-shaped impeller having a plurality of blades; m, a stock outlet; and n, a froth outlet. Flotation machines of this type are generally called "Denver" type. The stock liquid is introduced to the centre of the impeller k while the air is sucked in by rotation of the impeller. The liquid admixed with the air is diffused along the bottom surface of the cell due to the centrifugal force of the impeller k and rises along the side surfaces of the cell. At the liquid level, the air bubbles are separated as froth from the stock liquid. The liquid then flows down along the centre of the cell and circulates, Part of the liquid is discharged through the outlet m while the froth is discharged through the outlet n.

In such a flotation machine, the impeller k must be rotated rapidly so as to produce fine air bubbles. However, if its speed is too fast, the circulation of the liquid in the cell may become too violent, resulting in the floating froth being re-entrained back into the swirling stock liquid.

The flotation machines of the types described above have the problem in that the quantity of the air for producing air bubbles cannot be increased due to the fact that they are of self-suction type. Even if the air were forcibly introduced into the machine, only the quantity of ineffective air would be increased and a satisfactory result could not be attained. Furthermore, because of inadequate mixing and separation of the air/liquid, successive cells must be arranged in series, thereby resulting in a complicated and expensive installation.

By contrast, in recently developed flotation machines the high rotational speed of the rotor causes the air bubbles to be subjected to strong shearing forces and thus to be converted into a larger quantity into fine air bubbles, which are mixed into the stock liquid. The agitating action is intensified to satisfactorily diffuse air bubbles into the liquid and to increase the residence time of the bubbles in the liquid thereby increasing the opportunity for the ink particles to make contact with the bubbles. The cell is of large capacity to afford a sufficient period of time to permit floating and gathering of the air bubbles.

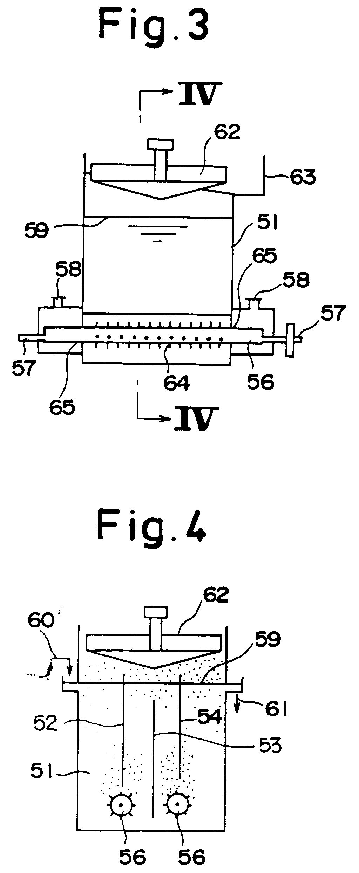

Figures 3 and 4 are a diagrammatic side sectional view and a sectional view on the line IV-IV in Figure 3, respectively, of a recently developed rotary diffusion type flotation machine (Japanese Patent 1st Publication No.245390/1986) in which reference numeral 51 denotes a vertical cylinder type cell; 52,53 and 54, weirs; 56, rotary diffusion pipes; 57, a rotating shaft; 58, an air supply inlet; 59, the liquid level; 60, a stock supply inlet; 61, a stock outlet; 62, a rotary froth collection blade; and 63, a froth trough.

The stock liquid flows through the inlet 60 into the cell 51 and repeatedly flows up and down in a serpentine manner between the weirs 52,53 and 54 and then is discharged through the outlet 61. The air flows through the inlet 58 into the diffusion pipes 56, which rotate at high speed, and flows into the stock liquid through vent holes 20-40mm in diameter formed in small projections 64 on the pipes 56. Because of the difference in velocity of the liquid and the surface of the diffusion pipes 56, the air is subjected to strong shearing forces and converted into fine air bubbles, which are diffused into the liquid. The stock liquid is violently agitated by the rotational force. The air bubbles in the liquid float up to the liquid level 56 to form froth, which is collected by the scraping blade 62 into the trough 63, and discharged to the exterior. The discharged froth may be secondarily processed as needs demand.

In a flotation machine of this type, in order to produce fine air bubbles and agitate the liquid in the vessel, which has a large capacity, the large-diameter pipes 56 must be rotated at high speed so that powerful driving force is required. The stock liquid repeatedly flows up and down between the weirs 52,53 and 54 and the bubbles in the downward flowing portions have difficulty in rising upwards which adversely affects the separation of the bubbles from the liquid. As a result, the production of froth over the liquid level varies between the liquid surface portions where the liquid flows upwardly and those where the liquid flows downwardly. Since the air is injected into the liquid from the interior of the diffusion pipes 56, a liquid-tight seal 65 between the pipes and the wall of the cell is necessary but complicated and difficult to maintain. When the machine is started or stopped or the balance between the air pressure and the liquid pressure is lost, the stock liquid may flow into the diffusion pipes 56 and adhere to the interior wall thereof due to centrifugal force, thereby clogging the air vents in the wall of the pipes 56. The agitated flow patterns produced by the diffusion pipes 56 are unstable so that when variations in concentration or the like of the liquid occur, the flow rates of the stock liquid may vary and the air bubbles may suddenly burst.

It is the object of the present invention to solve the various problems of the machines described above. The invention is based on the following concept and on the results of experiments conducted by the inventors.

When a certain volume of air is mixed into a liquid, the total surface area of the bubbles is substantially in inverse proportion to the mean diameters of the bubbles so that the smaller the mean diameter of the bubbles, the larger is their total surface area. The velocity of air bubbles flowing upwardly is substantially proportional to the mean diameter of the bubbles so that the residence time of the bubbles in the liquid is substantially inversely proportional to the mean diameter of the bubbles if the depth of the liquid remains constant. It follows therefore that opportunity of the air bubbles to come into contact with the ink particles to adsorb and entrap them is substantially inversely proportional to the square of the mean diameter of the bubbles so that the smaller the diameter of the bubbles, the more the said opportunity increases.

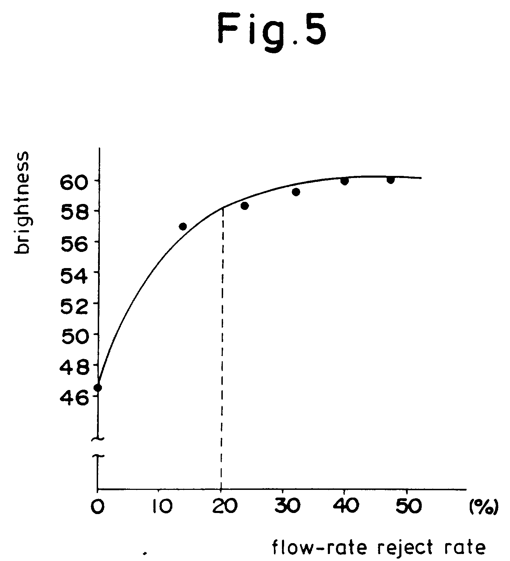

According to experimental results, it is noted that the larger the volume of air which is admixed and the larger the volume of the froth discharged, the better is the brightness of the de-inked paper. Figure 5 illustrates the relationship betweern the brightness (Hunter) of the accept stock and the flow-rate reject rate, obtained by processing waste paper stock consisting of 100% offset printed newspaper. It is noted that even if the flow-rate reject rate is increased in excess of 20%, the brightness is not substantially further increased, so that a flow-rate reject rate of the order of 15-20% is preferable (in this case, the fibre stock in the reject is of lower concentration than that at the stock inlet and the stock reject rate is of the order of approximately 5%).

Based on the above-mentioned problems encountered in the known flotation machines and the results of the experiments conducted by the inventors, the present invention has the following aims:
(1) Fine air bubbles are to be uniformly admixed to the stock liquid, thereby eliminating the necessity of blowing an excessive volume of air into the liquid and thus reducing the power required for blowing the air.
(2) The air bubbles are to be uniformly admixed to the stock liquid with a reduced agitating power.
(3) Turbulence and dead zones in the flow passages in the cell are to be eliminated to decrease the cell capacity for a given volume of stock liquid to be processed and the variation in brightness of the accept.
(4) The opportunity for the air bubbles to be mixed with and separated from the stock liquid is to be repeated thereby to shorten the processing time and consequently decrease the cell capacity for a given volume of stock liquid to be processed.
(5) Disturbance of the liquid level and variation in the generated froth are to be eliminated to smoothly remove the froth without being re-entrained in the swirling liquid.
(6) Finer air bubbles are to be produced to remove finer ink particles and to increase the opportunity for trapping the ink particles.
(7) The air bubble generating means or device is to be simple in construction and in maintenance and reliable in operation.

According to the present invention, there is provided a flotation machine for de-inking waste paper stock comprising a flotation cell defining a reservoir for a stock liquid which, in use, forms a free liquid surface in the cell, a froth receptacle at the upper portion of the cell for receiving froth floating up to the free liquid surface, a stock inlet at one end of the cell for supplying the stock liquid, a stock outlet at the other end of the cell for discharging the stock liquid and at least one elongate rotary air bubble generating means situated within the lower portion of the cell with its axis of rotation extending substantially horizontally, characterised in that the cell has an elongate shape with a substantially rectangular or a partly cylindrical shape in transverse cross-section, that the stock inlet is provided adjacent to the bottom of one end of the cell and arranged to introduce the stock liquid into the cell in a direction which is transverse to the length of the cell and the stock outlet is provided adjacent to the bottom of the other end of the cell, and that the or each air bubble generating means extends between the two ends of the cell with its axis of rotation substantially parallel to the longitudinal axis of the cell but laterally offset therefrom in the direction in which the lower portion of its periphery moves when it is rotated, whereby stock liquid introduced through the inlet flows along the length of the cell towards the outlet in at least one spiral flow pattern with a generally horizontal axis.

Thus in the machine in accordance with the invention the cell extends generally horizontally and thus will in practice generally be elongate and the stock liquid flows into the cell at one end and is then mixed with fine air bubbles produced by the air bubble generating means. Certain of the ink and other particles are adsorbed by air bubbles and then float to the surface of the liquid from which they pass, e.g. over an overflow weir, into the froth trough. The rotation of the air bubble generating means induces rotational movement of the liquid and after flowing upwardly to the liquid surface the liquid then flows downwardly again where it is again mixed with further air bubbles. This process is repeated a number of times whereby the de-inking step is repeated within the same flotation cell thereby achieving a high separation efficiency.

Due to the fact that fresh stock is constantly introduced into the inlet and withdrawn from the outlet, the circulating liquid flow moves progressively along the length of the cell, which is of horizontal type, and the flow pattern followed by the liquid therefore forms at least one spiral with a generally horizontal axis.

The upper portion of the cell is preferably open. Where the cell is of substantially rectangular cross-section its lower corners may be constituted by oblique planar surfaces or arcuate surfaces so as to eliminate dead spaces.

Whilst the machine may include only one air bubble generating means, it may incorporate two or more and in one embodiment there are two air bubble generating means which are arranged to rotate in the same sense and which are both laterally offset from the longitudinal axis of the cell in the same direction. In a further embodiment, there are two air bubble generating means which are arranged to rotate in opposite senses and which are symmetrically laterally offset from the longitudinal axis in opposite directions whereby, in use, two spiral flow patterns are formed.

Further features and details of the invention will be more apparent from the following description of certain preferred embodiments which is given by way of example with reference to Figures 6 to 8 and 11 to 15 of the accompanying drawings; Figures 9 and 10 are outside the scope of the present invention and are included as an example of how a flotation machine in accordance with the present invention may function with an air bubble generator; in which:

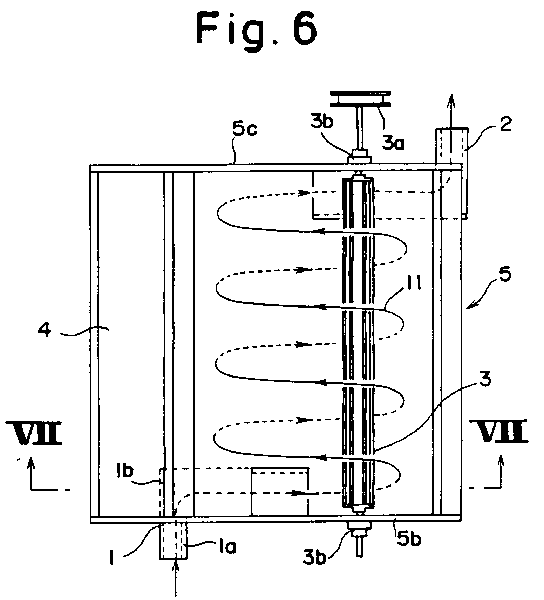

Figure 6 is a plan view of a preferred embodiment of a flotation machine for de-inking in accordance with the present invention;

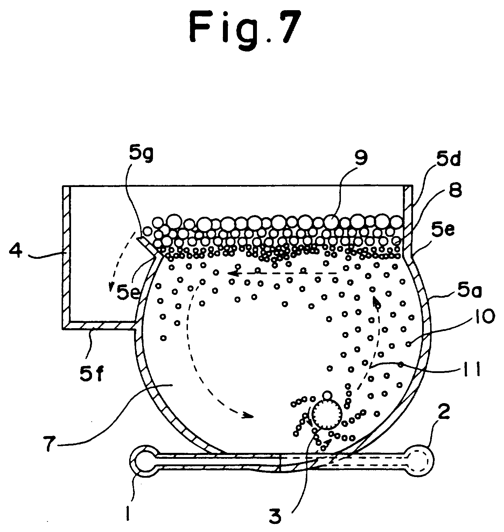

Figure 7 is a sectional view along the line VII-VII in Figure 6;

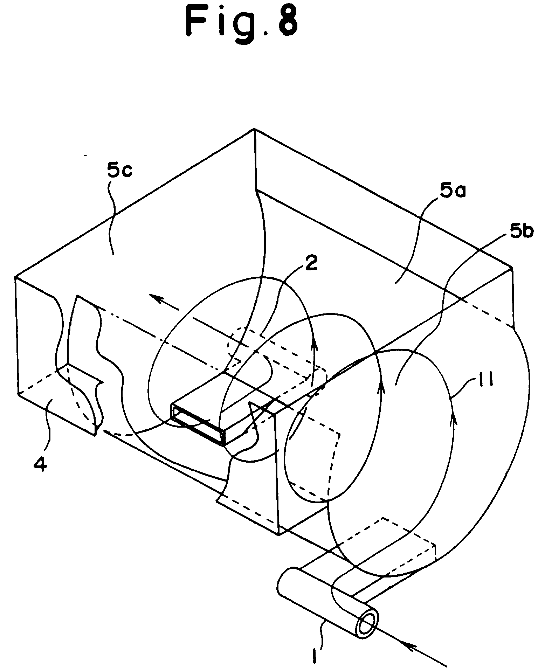

Figure 8 is a perspective view of a cell of the flotation machine in accordance with the present invention;

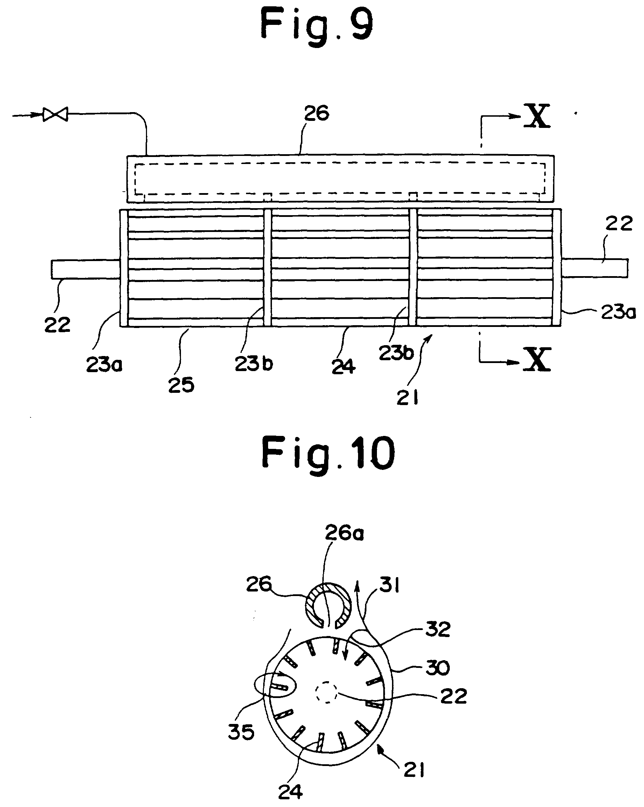

Figure 9 is a side view of an air bubble generator;
Figure 10 is a sectional view along the line X-X in Figure 9;

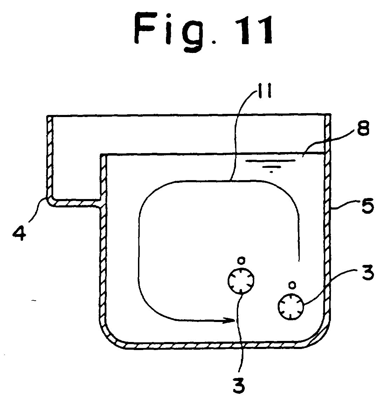

Figures 11 - 15 are sectional views of modified constructions of the flotation machine for de-inking in accordance with the present invention.

Referring to Figures 6 - 10, reference numeral 1 represents a stock inlet; 2, a stock outlet; 3, an air bubble generator; 4, a trough for trapping froth; 5, a flotation cell comprising a cylindrical barrel 5a and end plates 5b and 5c attached to opposite ends thereof; 7, a stock liquid; 8, the free surface of the liquid 7; 9, froth; 10, fine air bubbles; 11, spiral flow path; 21, a turbine rotor; 22, journals; 23, ribs; 24, blades; 25, a turbine rotor body; 26, an air supply pipe; and 26a, an air port.

The cell 5 comprises the substantially horizontally disposed and generally cylindrical barrel 5a which is cut away at its upper portion, end plates 5b and 5c attached to the opposite ends of the barrel 5a and frame members 5d which, together with a bottom plate 5f, define a froth trough 4 which is of rectangular section and extends laterally from one side of the cell along substantially the entire length thereof. More specifically, one of the members 5d extends from an upper cut edge 5e at one side of the barrel 5a; two of the members 5d extend vertically from the end plates 5b and 5c, are connected to the one member 5d and extend horizontally away from said cut edge 5e; and the remaining member 5d is connected to the said two members 5d and to the bottom plate 5f, thereby defining the froth trough 4. An overflow or weir plate 5g is formed integral with a further cut edge 5e at the other side of-the barrel 5a and extends obliquely outwardly so that froth overflows over the plate 5g into the trough 4.

The stock inlet 1 at the bottom of one end of the cell 5 comprises an inlet pipe 1a extending in the axial direction of the barrel 5a and a nozzle 1b which is connected to the inlet pipe 1a and extends perpendicular to the pipe 1a and tangential to the barrel 5a. The stock outlet 2 at the bottom of the other end of the cell 5 is substantially similar in construction to the stock inlet 1 and is symmetrical with the inlet 1.

The air bubble generator 3 extends between the end plates 5b and 5c within the lower portion of the cell 5. As shown in Figures 9 and 10, the generator 3 comprises a turbine rotor 21 and an air supply pipe 26 disposed above and adjacent to it. The rotor 21 comprises a rotor body 25 in the form of a cylindrical cage and axial journals 22 extending outwardly from opposite ends of the body 25. More specifically, the rotor body 25 is constructed by disposing a plurality (four in the embodiment) of equispaced, parallel disc-shaped ribs 23a and 23b having the same diameter coaxially, a plurality of equiangularly spaced blades 24 being securely attached to the outer peripheral surfaces of the ribs 23a and 23b. The air supply pipe 26 has at least one air outlet 26a which is open toward the turbine rotor 21 and which may be in the form of round hole or elongate slit. The journals 22 of the turbine rotor 21 extend through the end plates 5b and 5c and are supported by them in bearings 3b securely attached to their outer surfaces. A belt pulley 3a is carried by one of the journals 22 and is drivingly coupled to a motor (not shown) so that the pulley 3a may be rotated at high speed.

The air bubble generator 3 disposed below the axis of the barrel and is offset from the axis of the barrel 5a, when viewed from above, toward the rising path (to the right in Figure 6) of the spiral flow path followed by the stock liquid introduced into the cell 5 from the stock inlet 1.

The mode of operation of the machine described above is as follows:

The stock liquid 7 flows into the cell 5 in the axial direction thereof through the inlet pipe la of the stock supply inlet 1 and changes its flow direction by substantially 90 degrees so that it flows generally tangentially adjacent the bottom of one end of the cell 5 from the nozzle 1b. Due to the inertia of the stock liquid, it flows generally towards and reaches the air bubble generating device 3 where the liquid 7 is mixed with fine air bubbles and then has a reduced apparent specific gravity and thus buoyancy. The air bubbles are produced by the air flowing out through the port(s) 26a in one or more streams which are fragmented into fine bubbles by rotation of the bubble generator 3. Due to the combination of inertia on introduction into the cell 5 with buoyancy some of the liquid 7 flows upwardly and reaches the free liquid surface 8. A proportion of the liquid flow 30 moves with the outer peripheral surface of the turbine rotor 21 and impinges on the air supply pipe 26 above the rotor 21 and is divided into upward and downward flows 31 and 32. The upward flow 31 intensifies the above-described rising flow while the downward flow 32 assists introduction of the air from the pipe 26 into the rotor 21.

The stock liquid containing the fine bubbles 10 rises and reaches the free surface 8. It flows over the free surface 8 toward the froth trough 4 while some fine bubbles remain as froth over the free surface 8.

The stock liquid now substantially free from the fine air bubbles 10 flows down along the inner surface of the barrel 5a on the side of the froth trough 4 and again reaches the air bubble generating device 3. The stock liquid thus swirls repeatedly around the axis of the cell. Since liquid flows continuously into the cell, it is progressively displaced toward the stock outlet 2 and thus adapts, as shown in Figures 6 - 8, a spiral flow pattern 11 in the counterclockwise direction and flows out of the cell 5 through the stock outlet 2.

As mentioned previously, the construction of the air bubble generator 3 is such that the compressed air is blown towards the turbine rotor 21 which rotates at high speed, and as shown in Figure 10, a circulating flow 35 is formed around the blades 24 so that the compressed air flows into the rotor 21 from the rear, with respect to the direction of movement of the blades 24. The stock liquid 7 containing the fine air bubbles is then forced to flow out of the rotor by the centrifugal force and by the force responsible for the circulating flow 35. On two separate occasions, i.e. when the air flows into and out of the turbine 21, it is subjected to extremely strong shearing forces and thus becomes fine air bubbles 10 for mixing with the stock liquid 7. Due to the bubble generator 3 in the spiral flow path 11, the air bubbles 10 are uniformly mixed into the stock liquid and mixing and separating of the air bubbles 10 into and from the liquid 7 is repeated many times. Because the air bubbles 10 are uniformly distributed in the liquid 7 and have a constant rising velocity, the liquid flow remains in a stable state. Due to the shape of the cell, no turbulence of the liquid flow, no disturbance of the free surface and no variation in the distribution of the froth will occur. As a result, a stabilised bed of froth 9 is formed over the free surface 8 and no reentrainment of the bed of the froth 9 by the liquid 7 will occur. The froth bed over the free surface 8 is forced toward the trough 4 due to the spiral flow of the stock liquid 7 and overflows over the overflow plate 5g into the trough 4 from which the froth is discharged to the exterior and, if necessary, is subjected to a secondary process. The secondarily processed accept is returned to the stock inlet 1.

It is said that the diameter of ink particles removable from a liquid by a flotation process for de-inking is 10 µm or more and that the optimum diameter range of the ink particles is 10-15µm. It is also said that the diameter of the ink particles, which are solids comprising carbon particles bound by resin binder, adsorbable by an air bubble 1mm in diameter is of the order of 13µm. It follows therefore that the smaller the diameter of the air bubbles, the smaller the diameter of the ink particles which can be adsorbed. In the field of newspaper printing, offset printing is replacing relief printing. The carbon particles in the ink for offset printing are very fine (of the order of 0.01µm) and cannot be readily removed from fibres after printing. In order to overcome this problem, a deinking method is known in which the stock is condensed -to a very high degree and the fibres are subjected to mechanical shearing forces, thereby removing the attached ink particles. The shearing forces, of course, make the free ink particles smaller so that the diameter of the ink particles to be removed by the flotation method becomes less and less.

Figure 11 shows a first modification of the flotation machine in accordance with the present invention in which the cell has a generally rectangular cross-section with radiussed corners.

Cells with an angular cross-section may have a slower spiral liquid flow as compared with cylindrical cells but then have the advantage of easier fabrication and reduced size in comparison with their volume. A pair of air bubble generating devices are arranged offset towards one side of the cell. This is preferable to only one larger air generating device since the air bubbles are distributed more uniformly into the whole volume of the stock liquid within the cell.

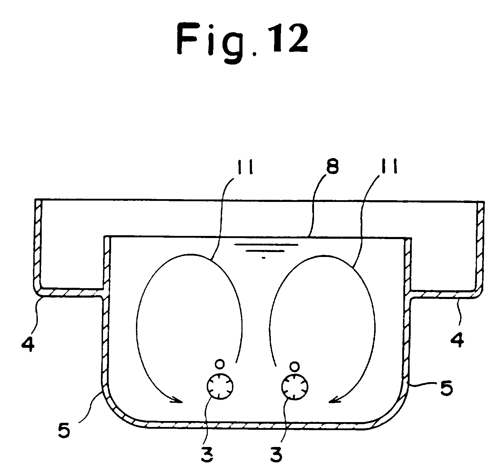

Figure 12 shows a third modification of the present invention in which the cell is of generally rectangular cross-section and two air bubble generating devices are disposed slightly offset in opposite directions by the same distance from the axis of the cell so that two spiral flows are formed which have rising flows at the centre and downward flows along the cell walls. The third modification is especially advantageous when a large volume of stock liquid is to be processed.

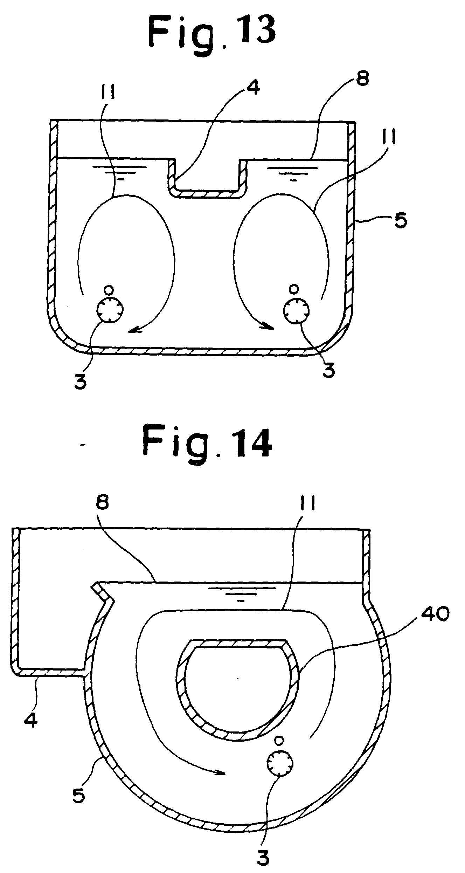

Figure 13 shows a modification of the third modification shown in Figure 12. The two air bubble generating devices are offset further towards the side walls of the cell so that the down flows are formed between the devices and the upward flows are adjacent the cell walls. Correspondingly, the froth trough is disposed along the centre of the cell. This construction is advantageous especially when the cell is of large size.

Figure 14 shows a fourth modification in which a core 40 of similar shape to but smaller than the cell extends horizontally along the length of the cell in the vicinity of the axis of the spiral flow therein. Because of the core 40, the spiral flow positively passes through the air bubble generating device 3 so that mixing of the stock liquid with air bubbles is much facilitated and dead zones liable to be produced in the vicinity of the axis of the spiral flow are prevented.

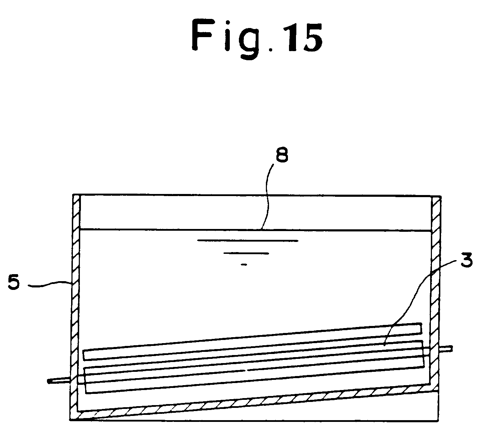

Figure 15 shows a fifth modification of the present invention in which the bottom of the cell is inclined. In this case, it is preferable to dispose the air bubble generating device parallel with the inclined bottom. The inclined bottom is advantageous in that upon shutdown the stock liquid can be readily and completely discharged out of the cell so that cleaning of the cell is facilitated.

It is to be understood that the flotation machine for de-inking and the parts thereof in accordance with the present invention are not limited to the embodiments described above and that various further modifications may be made. For instance, when the flotation machine incorporates a rotary diffusion device as shown in Figure 3, additional effects can be attained.

The effects and advantages of the present invention may be summarised as follows:

The stock liquid flows in one or more spiral flow patterns within the cell between the inlet and outlet and thus-repeatedly flows in the vicinity of the bubble generating device which mixes further bubbles in with it. The liquid then flows upwardly to the free surface, at which the entrained froth remains, and-then flows downwardly again and the cycle is repeated so that
(1) fine air bubbles are uniformly and repeatedly mixed into the liquid thereby eliminating the injection of useless air and reducing the power required to blow the air;
(2) the air bubbles mixed into the liquid promote agitation of the liquid so that no separate power source is required for agitation and the power required to drive the bubble generating device is reduced;
(3) no turbulence is caused in the liquid and no dead zone is formed in the cell whereby the volume of the cell for processing a given volume of stock liquid can be reduced and variations in brightness of the accept are reduced to a minimum;
(4) repeated mixing and separation of the liquid and air bubbles reduces the processing time and decreases the volume of the cell required for processing a given volume of liquid; and
(5) there is no disturbance of the free surface of the liquid and froth is generated uniformly over the surface whereby froth floating on the surface is not re-entrained by the swirling liquid but is smoothly removed, e.g. over an overflow weir into the froth trough from which it is subsequently discharged.

## Claims

1. A flotation machine for de-inking waste paper stock comprising a flotation cell (5) defining a reservoir for a stock liquid which, in use, forms a free liquid surface in the cell (5), a froth receptacle (4) at the upper portion of the cell (5) for receiving froth floating up to the free liquid surface, a stock inlet (1) at one end of the cell (5) for supplying the stock liquid, a stock outlet (2) at the other end of the cell (5) for discharging the stock liquid and at least one elongate rotary air bubble generating means (3) situated within the lower portion of the cell (5) with its axis of rotation extending substantially horizontally, characterised in that the cell (5) has an elongate shape with a substantially rectangular or a partly cylindrical shape in transverse cross-section, that the stock inlet (1) is provided adjacent to the bottom of one end of the cell (5) and arranged to introduce the stock liquid into the cell (5) in a direction which is transverse to the length of the cell (5) and the stock outlet (2) is provided adjacent to the bottom of the other end of the cell (5), and that the or each air bubble generating means (3) extends between the two ends of the cell (5) with its axis of rotation substantially parallel to the longitudinal axis of the cell (5) but laterally offset therefrom in the direction in which the lower portion of its periphery moves when it is rotated, whereby stock liquid introduced through the inlet (1) flows along the length of the cell (5) towards the outlet (2) in at least one spiral flow pattern (11) with a generally horizontal axis.

2. A machine as claimed in claim 1, characterised in that the upper portion of the substantially rectangular or partly cylindrical cell (5) is open.

3. A machine as claimed in any one of the preceding claims characterised in that there are two air bubble generating means (3) which are arranged to rotate in the same sense and which are both laterally offset from the longitudinal axis of the cell in the same direction.

4. A machine as claimed in claim 1 or 2 characterised in that there are two air bubble generating means (3) which are arranged to rotate in opposite senses and which are symetrically laterally offset from the longitudinal axis in opposite directions whereby, in use, two spiral flow patterns (11) are formed.

## Patentansprüche

1. Flotationsmaschine zum Entfärben von Altpapiermasse, umfassend eine Flotationszelle (5), die ein Reservoir für eine Massenflüssigkeit definiert, die im Gebrauch eine freie Flüssigkeitsoberfläche in der Zelle (5) bildet, eine Schaumaufnahme (4) am oberen Abschnitt der Zelle (5) zum Aufnehmen von Schaum, der an die freie Flüssigkeitsoberfläche aufschwimmt, einen Masseneinlaß (1) am einen Ende der Zelle (5) zum Zuführen der Massenflüssigkeit, einen Massenauslaß (2) am anderen Ende der Zelle (5) zum Abführen der Massenflüssigkeit und wenigstens ein in dem unteren Abschnitt der Zelle (5) angeordnetes längliches, drehbares Luftblasen-Erzeugungsmittel (3), dessen Drehachse sich im wesentlichen horizontal erstreckt, dadurch gekennzeichnet, daß die Zelle (5) eine längliche Form mit einer im Querschnitt im wesentlichen rechteckigen oder teilweise zylindrischen Form aufweist, daß der Masseneinlaß (1) angrenzend an den Boden des einen Endes der Zelle (5) vorgesehen und so angeordnet ist, daß die Massenflüssigkeit in einer Richtung quer zur Längsrichtung der Zelle (5) in die Zelle (5) eingeführt wird und der Massenauslaß (2) angrenzend an den Boden des anderen Endes der Zelle (5) vogesehen ist, und daß das oder jedes Luftblasen-Erzeugungsmittel (3) sich zwischen den beiden Enden der Zelle (5) erstreckt, wobei seine Drehachse im wesentlichen parallel zur Längsachse der Zelle (5), aber gegenüber dieser seitlich in die Richtung versetzt ist, in die sich der untere Abschnitt ihres Umfanges bewegt, wenn sie gedreht wird, wodurch durch den Einlaß (1) eingeführte Massenflüssigkeit entlang der Länge der Zelle (5) in wenigstens einem spiralförmigen Strömungsmuster (11) mit einer im wesentlichen horizontalen Achse zu dem Auslaß (2) strömt.

2. Maschine nach Anspruch 1, dadurch gekennzeichnet, daß der obere Aschnitt der im wesentlichen rechteckigen oder teilweise zylindrischen Zelle (5) offen ist.

3. Maschine nach einem der vorhergehenden Ansprüche, dadurch gekennzeichnet, daß zwei Luftblasen-Erzeugungsmittel (3) vorhanden sind, die so angeordneet sind, daß sie sich in der gleichen Richtung drehen, und die beide in die gleiche Richtung seitlich gegenüber der Längsachse der Zelle versetzt sind.

4. Maschine nach einem der Ansprüche 1 oder 2, dadurch gekennzeichnet, daß zwei Luftblasen-Erzeugungsmittel (3) vorhanden sind, die so angeordnet sind, daß sie sich in entgegengesetzte Richtung drehen, und die symmetrisch in entgegengesetzte Richtungen seitlich gegenüber der Längsachse der Zelle versetzt sind, wodurch im Betrieb zwei spiralförmige Strömungsmuster (11) gebildet werden.

## Revendications

1. Machine de flottation destinée à éliminer l'encre d'une pâte de vieux papiers, comprenant une cellule de flottation (5), laquelle définit un réservoir destiné à une pâte liquide qui, lors de l'utilisation, forme une surface libre de liquide dans la cellule (5), un réceptacle à écume (4) à la partie supérieure de la cellule (5) pour recevoir l'écume qui monte vers la surface libre du liquide et qui flotte, une entrée de pâte (1) à l'une des extrémités de la cellule (5) pour fournir la pâte liquide, une sortie de pâte (2) à l'autre extrémité de la cellule (5) pour évacuer la pâte liquide, et au moins un moyen tournant allongé générateur de bulles d'air (3) qui est situé à l'intérieur de la partie inférieure de la cellule (5) et dont l'axe de rotation s'étend d'une manière sensiblement horizontale, caractérisée par le fait que la cellule (5) présente une forme allongée, sa forme en section transversale étant sensiblement rectangulaire ou partiellement cylindrique, par le fait que l'entrée de pâte (1) est prévue au voisinage du fond d'une extrémité de la cellule (5) en étant agencée de façon à introduire la pâte liquide dans la cellule (5) dans une direction qui est transversale par rapport à la longueur de la cellule (5), et que la sortie de pâte (2) est prévue au voisinage du fond de l'autre extrémité de la cellule (5), et par le fait que le moyen générateur de bulles d'air (3) ou chacun des moyens générateurs de bulles d'air s'étend entre les deux extrémités de la cellule (5), son axe de rotation étant sensiblement parallèle à l'axe longitudinal de la cellule (5), mais décalé latéralement par rapport à celui-ci dans la direction dans laquelle la partie inférieure de son pourtour se déplace lorsqu'il est entraîné en rotation, cependant que la pâte liquide qui est introduite par l'entrée (1) s'écoule vers la sortie (2) en suivant la longueur de la cellule (5) selon au moins une configuration d'écoulement en spirale (11) dont l'axe est horizontal d'une façon générale.

2. Machine selon la revendication 1, caractérisée par le fait que la partie supérieure de la cellule (5), laquelle est sensiblement rectangulaire ou partiellement cylindrique, est ouverte.

3. Machine selon l'une quelconque des revendications précédentes, caractérisée par le fait qu'il existe deux moyens générateurs de bulles d'air (3) qui sont agencés de manière à tourner dans le même sens et qui sont tous les deux décalés latéralement dans la même direction par rapport à l'axe longitudinal de la cellule.

4. Machine selon la revendication 1 ou 2, caractérisée par le fait qu'il existe deux moyens générateurs de bulles d'air (3) qui sont agencés de manière à tourner dans des sens opposés et qui sont décalés latéralement d'une manière symétrique dans des directions opposées par rapport à l'axe longitudinal, ce qui forme deux configurations d'écoulement en spirale (11) lors de l'utilisation.
